# EUROPÄISCHE PATENTSCHRIFT

(11) **EP 2 941 808 B1**
(45) Veröffentlichungstag und Bekanntmachung des Hinweises auf die Patenterteilung: **17.06.2020**
(21) Anmeldenummer: 13707356.5
(22) Anmeldetag: 28.02.2013
(51) Int. Cl.: H02J 3/36, H02J 3/38, F03D 7/04, F03D 9/25

(54) **WINDPARKANBINDUNG MIT DIODENGLEICHRICHTER**
WIND FARM CONNECTION HAVING A DIODE RECTIFIER
RACCORDEMENT D'UN PARC ÉOLIEN ÉQUIPÉ D'UN REDRESSEUR À DIODES

(43) Veröffentlichungstag der Anmeldung: 11.11.2015
(60) Teilanmeldung: 16001595.4
(73) Patentinhaber: Siemens Aktiengesellschaft, 80333 München (DE)
(72) Erfinder: KNAAK, Hans-Joachim, 91054 Erlangen (DE); MENKE, Peter, 96237 Oberfüllbach (DE); SCHRÖCK, Thomas, 91056 Erlangen (DE); SCHUSTER, Roland, 91056 Erlangen (DE); WESTERWELLER, Thomas, 96135 Stegaurach (DE)
(86) Internationale Anmeldenummer: PCT/EP2013/054046
(87) Internationale Veröffentlichungsnummer: WO 2014/131454

(56) Entgegenhaltungen:
- EP-A2- 1 752 659
- WO-A1-2014/032668
- CN-B- 102 222 929
- US-A1- 2008 284 172
- US-A1- 2011 140 511
- BLASCO-GIMENEZ R ET AL: "Harmonic filter reduction of off-shore wind farms connected with a diode based HVDC link", INDUSTRIAL ELECTRONICS (ISIE), 2012 IEEE INTERNATIONAL SYMPOSIUM ON, IEEE, 28. Mai 2012 (2012-05-28), Seiten 1585-1590, XP032199944, DOI: 10.1109/ISIE.2012.6237328 ISBN: 978-1-4673-0159-6 in der Anmeldung erwähnt
- S. BERNAL-PEREZ ET AL: "Wind power plant control for the connection to multiterminal HVdc links", 2012 IEEE ENERGY CONVERSION CONGRESS AND EXPOSITION (ECCE), 1. September 2012 (2012-09-01), Seiten 2873-2879, XP055077023, DOI: 10.1109/ECCE.2012.6342372 ISBN: 978-1-46-730801-4
- BLASCO-GIMENEZ R ET AL: "Connection of off-shore wind farms using a diode based HVDC link with reduced filter banks", POWER ELECTRONICS FOR DISTRIBUTED GENERATION SYSTEMS (PEDG), 2012 3RD IEEE INTERNATIONAL SYMPOSIUM ON, IEEE, 25. Juni 2012 (2012-06-25), Seiten 745-750, XP032226645, DOI: 10.1109/PEDG.2012.6254085 ISBN: 978-1-4673-2021-4
- BERNAL-PEREZ S ET AL: "Off-shore wind farm grid connection using a novel diode-rectifier and VSC-inverter based HVDC transmission link", IECON 2011 - 37TH ANNUAL CONFERENCE ON IEEE INDUSTRIAL ELECTRONICS SOCIETY, IEEE, 7. November 2011 (2011-11-07), Seiten 3186-3191, XP032085289, DOI: 10.1109/IECON.2011.6119820 ISBN: 978-1-61284-969-0
- BERNAL-PEREZ S ET AL: "Off-shore wind farm grid connection using a novel diode-rectifier and VSC-inverter based HVDC transmission link", IECON 2011 - 37TH ANNUAL CONFERENCE ON IEEE INDUSTRIAL ELECTRONICS SOCIETY, IEEE, 7. November 2011 (2011-11-07), Seiten 3186-3191, XP032104974, DOI: 10.1109/IECON.2011.6119820 ISBN: 978-1-61284-969-0

## Beschreibung

Die Erfindung betrifft eine Anlage zum Übertragen elektrischer Leistung zwischen einem in einem Meer oder einer See angeordneten Windpark und einem landseitigen Energieversorgungsnetz mit einem an das Energieversorgungsnetz anschließbaren landseitigen Umrichter, der über eine Gleichspannungsverbindung mit einem seeseitigen Diodengleichrichter verbunden ist, wobei der Diodengleichrichter über ein seeseitiges Wechselspannungsnetz mit dem Windpark gekoppelt ist.

Eine solche Anlage ist beispielsweise aus dem Artikel von S. Bernal-Perez et al., "Windpower plant control for the connection to multiterminal HVDC links", IEEE, 2012, Seite 2873 bekannt. Dort ist eine Anlage offenbart, bei der ein Diodengleichrichter gleichspannungsseitig mit einem Gleichspannungszwischenkreis verbunden ist. Der Gleichspannungszwischenkreis erstreckt sich zwischen zwei spannungseinprägenden Umrichtern, die im Englischen auch als "Voltage Source Converter (VSC)" bezeichnet werden. Der Diodengleichrichter ist über Transformatoren und einem Wechselspannungsnetz mit einem Windpark verbunden. Darüber hinaus sind Filtereinheiten offenbart, die wechselspannungsseitig mit dem Umrichter verbunden sind. Gleichspannungsseitig dient eine Glättungsdrossel zum Glätten des vom Diodengleichrichter erzeugten Gleichstromes.

Die Anbindung von im Meer aufgestellten Windparks an ein landseitiges Versorgungsnetz kann bei großen Übertragungsstrecken ökonomisch nur mit Hilfe von Gleichstrom erfolgen. Aus diesem Grunde wird in der Praxis derzeit ein Umrichter auf einer Hochseeplattform untergebracht, die in der Nähe des Windparks im Meer aufgestellt wird. Dieser seeseitige Umrichter ist über ein Wechselspannungsnetz mit dem Windpark verbunden, wobei sich eine Gleichspannungsverbindung von seinem Gleichspannungsanschluss zu einem landseitigen Umrichter erstreckt. Die Umrichter ermöglichen eine Leistungsübertragung in beiden Richtungen. Zum Anfahren des Windparks wird durch den seeseitigen Umrichter ein Gleichspannungsnetz erzeugt, wobei die dafür notwendige Versorgungsenergie dem landseitigen Energieversorgungsnetz entnommen werden kann. Die Windenergieanlagen des Windparks können sich daher leicht auf das bestehende Wechselspannungsnetz aufsynchronisieren. Bei stärkeren Winden erfolgt die gewünschte Leistungsflussumkehr, nämlich die Leistungsübertragung von dem Windpark zum landseitigen Energieversorgungsnetz. Derzeit werden als Umrichter spannungseinprägende und selbstgeführte Umrichter (VSCs) und insbesondere Mehrstufenumrichter eingesetzt. Das Aufstellen solcher Umrichter im Meer ist jedoch aufgrund des immer noch hohen Gewichts der Umrichter kostenintensiv.

Daher wurde bereits vorgeschlagen, anstelle eines selbstgeführten Umrichters einen Diodengleichrichter seeseitig einzusetzen, der lediglich passive Leistungshalbleiter in Gestalt von Dioden aufweist. Ein solcher Diodenumrichter ermöglicht den Leistungstransport zwar in nur einer Richtung. Er weist jedoch den Vorteil auf, dass Verluste und das Gewicht im Vergleich mit einem selbstgeführten Umrichter deutlich herabgesetzt sind. Darüber hinaus sind kompakte Leistungshalbleiter einsetzbar.

Die Patentanmeldung US 2011/0140511 A1 offenbart ein Energie-übertragungssystem, mit dem elektrische Energie von einem Windpark über eine Hochspannungsgleichstrom-Übertragungsleitung zu einem Energieübertragungsnetz übertragen wird. Über die Hochspannungsgleichstrom-Übertragungsleitung kann auch elektrische Energie zu dem Windpark übertragen werden, indem der Gleichstrom mit einer Frequenz von beispielsweise 100 Hz moduliert wird.

Die Patentanmeldung WO 2014/032668 A1 offenbart ein Verbindungssystem zum Verbinden eines elektrischen Generators mit einem elektrischen Gleichstromsystem. Das Verbindungssystem weist eine steuerbare Spannungsquelleneinheit auf, die funktionell mit dem Stromgenerator in Reihe geschaltet ist, sowie einen Gleichrichter, der den von der Spannungsquelleneinheit ausgegebenen Wechselstrom gleichrichtet und einen Gleichstrom für das elektrische Gleichstromsystem bereitstellt. Weiterhin weist das Verbindungssystem eine zusätzliche Wechselspannungsleitung auf, die den Generator mit einem an das Gleichstromsystem angeschlossenen Stromrichter verbindet.

Aus der Schrift CN 102 222 929 A ist eine Einrichtung zur Energieübertragung zwischen einem ersten Wechselspannungssystem A und einem zweiten Wechselspannungssystem B bekannt. Die Energieübertragung erfolgt dabei von dem ersten Wechselspannungssystem A über einen Diodengleichrichter, eine Gleichstromleitung und einen modularen Multilevelstromrichter zu dem zweiten Wechselspannungssystem B. Parallel zu dem Diodengleichrichter ist ein zweiter modularer Multilevelstromrichter kleinerer Leistung angeordnet, um im Fall eines Fehlers das erste Wechselspannungssystem A mit elektrischer Energie versorgen zu können.

Aufgabe der Erfindung ist es, eine Anlage der eingangs genannten Art bereitzustellen, mit der das Einspeisen elektrischer Leistung in das seeseitige Wechselspannungsnetz im Bedarfsfall ermöglicht ist.

Die Erfindung löst diese Aufgabe durch eine Anlage nach dem unabhängigen Patentanspruch. Dabei sind Energieversorgungsmittel zum Einspeisen elektrischer Leistung in das seeseitige Wechselspannungsnetz vorgesehen, wobei die Energieversorgungsmittel wenigstens eine sich zumindest teilweise im Meer erstreckende Energieversorgungsleitung aufweisen, die das seeseitige Wechselspannungsnetz mit einem see- oder landseitigen Einkoppelbauteil verbindet, das zum Einspeisen einer Leistung in die Energieversorgungsleitung eingerichtet ist.

Erfindungsgemäß sind Energieversorgungsmittel zum Einspeisen einer elektrischen Leistung in das seeseitige Wechselspannungsnetz vorgesehen. Die Energieversorgungsmittel weisen eine Energieversorgungsleitung auf, die sich zumindest teilweise im Meer erstreckt. Dadurch unterscheidet sich die Erfindung gegenüber Energieversorgungsmitteln, die beispielsweise aus dem Bereich der Hochspannungsgleichstromübertragung bekannt sind. Hierbei wird auf der Hochseeplattform, die den meerseitigen Umrichter trägt, ein Dieselmotor aufgestellt, der einen Wechselspannung erzeugenden Generator antreibt. Die vom Generator erzeugte Wechselspannung wird in der Regel über einen Transformator in das seeseitige Wechselspannungsnetz eingekoppelt. Die Versorgung des Generators mit Kraftstoff ist jedoch aufwändig. Sie muss mit Hilfe von Schiffen fortwährend erfolgen. Darüber hinaus ist der Dieselmotor wartungsintensiv und aufgrund der entstehenden Abgase nicht umweltfreundlich. Erfindungsgemäß wird die von dem seeseitigen Windpark benötigte Leistung über ein von einem Einkoppelelement in eine sich durch das Wasser erstreckende Energieversorgungsleitung eingespeist. Das Einkoppelbauteil kann beispielsweise an Land angeordnet sein und von dem Energieversorgungsnetz mit Leistung versorgt werden. Alternativ ist es auch möglich, dass das Einkoppelbauteil seeseitig angeordnet ist und dafür sorgt, dass das seeseitige Wechselspannungsnetz mit einem anderen seeseitigen Wechselspannungsnetz einer anderen Anlage verbunden wird. Das Einkoppelbauteil ist dann z.B. ein einfacher Schalter. Die von den Energieversorgungsmitteln bereitgestellte Leistung kann erfindungsgemäß von den Komponenten des Windparks, beispielsweise den Motoren zum Ausrichten der Rotorblätter oder einer gesamten Windenergieanlage, eingesetzt werden. Darüber hinaus ist es im Rahmen der Erfindung auch möglich, mit Hilfe der von den Energieversorgungsmitteln bereitgestellten elektrischen Leistung im seeseitigen Wechselspannungsnetz eine Wechselspannung bereitzustellen, auf die die Windenergieanlagen des Windparks auf bekannte Art und Weise aufsynchronisieren können.

Die Gleichspannungsverbindung dient bei Wind zum Übertragen der elektrischen Leistung vom Windpark ins landseitige Energieversorgungsnetz, wobei die Spannung von dem Diodengleichrichter gleichrichtet und von dem landseitigen Umrichter in Wechselspannung umgewandelt wird.

Der Zusatzwechselrichter ist für geringere Übertragungsleistungen ausgelegt als der landseitige Umrichter oder aber der Diodengleichrichter.

Erfindungsgemäß ist die Energieversorgungsleitung eine zusätzliche Hilfsgleichspannungsverbindung, die mit dem Einkoppelbauteil und einem seeseitig angeordneten Zusatzwechselrichter verbunden ist. Gemäß dieser Variante der Erfindung wird neben der eigentlichen Gleichspannungsverbindung zur Übertragung der Leistung von See auf Land eine eigene Energieversorgung für das seeseitige Wechselspannungsnetz bereitgestellt. Diese zusätzliche Hilfsgleichspannungsverbindung, beispielsweise eine zweipolige Gleichspannungsverbindung aus Plus- und Minuspol, kann beispielsweise in der gleichen Kabelisolierung wie die Hauptgleichspannungsverbindung angeordnet sein.

Erfindungsgemäß ist das Einkoppelbauteil ein zusätzlicher Hilfsumrichter. Gemäß einer diesbezüglich zweckmäßigen Weiterentwicklung ist der Umrichter und/oder der Hilfsumrichter jeweils ein modularer Mehrstufenumrichter. Abweichend hiervon ist es jedoch auch möglich, dass der Umrichter ein so genannter fremdgeführter Umrichter ist, der aus Thyristoren bestehende Stromventile aufweist. Thyristoren können im Gegensatz zu ein- und abschaltbaren Leistungshalbleiterschaltern, wie IGBTs, GTOs oder IGCTs, lediglich aktiv von einem Sperrzustand in den leitenden Zustand überführt werden. Erst wenn der über den Thyristor führende Strom unter einen Haltestrom absinkt, erlangt der Thyristor wieder seine Sperrstellung, in der ein Stromfluss über den Thyristor nicht mehr möglich ist. Der landseitige Umrichter ist jedoch in der Regel an das starke Energieversorgungsnetz angeschlossen, das für die notwendige Kommutierung des Stromes und somit für ein Abschalten der Stromrichterventile sorgt.

Modulare Mehrstufenumrichter weisen Phasenmodule auf, deren Anzahl der Anzahl der Phasen des angeschlossenen Wechselspannungsnetzes entspricht. Dabei ist jedes Phasenmodul als Dreipol ausgebildet und weist zwei äußere Gleichspannungsanschlüsse und ein mittlerer Wechselspannungsanschluss auf. Zwischen dem Wechselspannungsanschluss und jedem Gleichspannungsanschluss erstreckt sich ein Phasenmodulzweig, der eine Reihenschaltung aus zweipoligen Submodulen aufweist. Jedes Submodul ist mit einem Energiespeicher, wie beispielsweise einem unipolaren Kondensator, ausgerüstet. Parallel zum Energiespeicher ist eine Leistungshalbleiterschaltung angeordnet, die je nach Ansteuerung ihrer Leistungshalbleiter dafür sorgt, dass die an den beiden Submodulanschlussklemmen eines jeden Submoduls erzeugte Spannung stufenweise verändert werden kann. Im Falle von so genannten Halbbrückenmodulen ist eine Reihenschaltung von zwei ein- und abschaltbaren Leistungshalbleiterschaltern, wie beispielsweise IGBTs, IGCTs oder dergleichen, bereitgestellt, wobei jedem ein- und abschaltbaren Leistungshalbleiterschalter eine Freilaufdiode gegensinnig parallel geschaltet ist. Alternativ können auch rückwärts leitfähige ansteuerbare Leistungshalbleiterschalter zum Einsatz gelangen. Bei einer Halbbrückenschaltung ist eine erste Submodulanschlussklemme direkt mit einem Pol des Energiespeichers verbunden, während die andere Submodulanschlussklemme mit dem Potenzialpunkt zwischen den ein- und abschaltbaren Leistungshalbleiterschaltern verbunden ist. Bei einer Vollbrückenschaltung sind zwei Reihenschaltungen aus jeweils zwei ein- und abschaltbaren Leistungshalbleiterschaltern vorgesehen, wobei eine Submodulanschlussklemme mit dem Potenzialpunkt zwischen den ein- und abschaltbaren Leistungshalbleiterschaltern der ersten Reihenschaltung und die zweite Submodulanschlussklemme mit dem Potenzialpunkt zwischen den ein-und abschaltbaren Leistungshalbleiterschaltern der zweiten Reihenschaltung verbunden ist.

Zweckmäßigerweise ist das Einkoppelbauteil auf einem seeseitigen Abschnitt einer weiteren Anlage zum Übertragen elektrischer Leistung zwischen dem seeseitigen Windpark und einem landseitigen Versorgungsnetz angeordnet. Mit anderen Worten ist das Einkoppelbauteil Teil einer parallelen Anlage oder Teil eines parallelen Windparks oder eines parallelen Wechselspannungsnetzes, wobei die Anlage sich von der erfindungsgemäßen Anlage unterscheiden kann. Beispielsweise weist die parallele Anlage einen selbstgeführten Umrichter auf, so dass das Wechselspannungsnetz auf einfache Art und Weise und ohne zusätzliche Energieversorgungsmittel von Land aus mit Energie versorgt werden kann.

Selbstverständlich ist es im Rahmen der Erfindung auch möglich, dass die parallele Anlage und die erfindungsgemäße Anlage identisch sind.

Zweckmäßigerweise ist der Diodengleichrichter über wenigstens einen Transformator mit dem seeseitigen Wechselspannungsnetz verbunden. Darüber hinaus ist es vorteilhaft, in der Gleichspannungsverbindung in unmittelbarer Nachbarschaft zum Diodengleichrichter eine Gleichspannungsglättungsdrossel anzuordnen. Schließlich ist es auch zweckmäßig, wechselspannungsseitig des Diodengleichrichters eine Filtereinheit vorzusehen. Die Filtereinheit dient zum einen zur Blindleistungskompensation und zum anderen zur Beseitigung von harmonischen Oberschwingungen im Wechselspannungsnetz. Die Ausgestaltung der Filtereinheit ist beliebig. Sie kann mehrere passive und/oder aktive Filter aufweisen. Entsprechendes gilt für die Gleichspannungsdrossel, die für die Beseitigung gleichspannungsseitiger Oberschwingungen sorgt. Der Transformator ist in der Regel erforderlich, da der Diodengleichrichter ein fest vorgegebenes Übersetzungsverhältnis zwischen der anliegenden Gleich- und Wechselspannung vorgibt.

Gemäß einer zweckmäßigen Weiterentwicklung der Erfindung umfasst die Filtereinheit zumindest eine Windenergieanlage des Windparks. Die Anzahl der Windenergieanlagen, die Teil der Filtereinheiten sind, ist im Rahmen der Erfindung beliebig. Die besagte Windenergieanlage oder die besagten Windenergieanlagen dienen dann beispielsweise zur Blindleistungskompensation und/oder zur Kompensation von harmonischen Oberschwingungen der Grundfrequenz der Netzspannung. Im Rahmen der Erfindung kann die Filtereinheit auch ausschließlich aus Windenergieanlagen gebildet sein.

Im Rahmen der Erfindung kann es zweckmäßig sein, dass der Diodengleichrichter und der Transformator auf unterschiedlichen Hochseefundamenten angeordnet sind.

Gemäß einer weiteren Variante verfügt der Diodengleichrichter über mehrere gleichspannungsseitig in Reihe oder parallel geschaltete Teildiodengleichrichter. Die Teildiodengleichrichter können dann für geringere Spannungen ausgelegt werden. Zweckmäßigerweise sind die Teildiodengleichrichter in einem Isoliermedium, wie beispielsweise einem Schutzgas oder einer isolierenden Flüssigkeit oder in einer Feststoffisolierung, angeordnet. Mit Hilfe der Teildiodengleichrichter ist der Diodengleichrichter einfach an die jeweiligen Anforderungen anpassbar. Darüber hinaus ist jeder Teildiodengleichrichter leicht und kann daher auf relativ kostengünstigen Fundamenten, beispielsweise dem Fundament einer Windenergieanlage, aufgestellt werden.

Vorteilhafterweise ist jeder Teildiodengleichrichter auf einem eigenen Hochseefundament angeordnet. Das Hochseefundament ist beispielsweise ein Fundament einer Windenergieanlage.

Zweckmäßigerweise ist jeder Teildiodengleichrichter über einen Teiltransformator mit einem Wechselspannungsnetz verbunden. Mit anderen Worten verfügt jeder Teilumrichter über seinen eigenen separaten fest zugeordneten Teiltransformator.

Über den besagten Teiltransformator ist der jeweilige Teilumrichter entweder mit dem gleichen Wechselspannungsnetz oder aber mit verschiedenen Strängen eines Wechselspannungsnetzes verbunden, wobei in jedem Strang mehrere Windenergieanlagen angeordnet sind. Mit anderen Worten ist jeder Teilumrichter mit einem Strahlennetz verbunden.

Selbstverständlich können die Stränge auch mit einer gemeinsamen und beispielsweise redundant ausgelegten Sammelschiene verbunden sein, so dass alle Teiltransformatoren mit dem gleichen Wechselspannungsnetz verbunden sind.

Zweckmäßigerweise ist jeder Teildiodengleichrichter jeweils mittels eines Überbrückungsschalters überbrückbar. Jeder Teildiodengleichrichter weist zwei Gleichspannungsklemmen auf, die durch Schließen des Überbrückungsschalters miteinander verbunden werden. Dies erfolgt beispielsweise bei einer Beschädigung des Teildiodengleichrichters oder Fehlern auf seiner Wechselspannungsseite.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleich wirkende Bauteile verweisen und wobei
- Figur 1: eine Anlage mit bekannten Energieversorgungsmitteln und
- Figuren 2 bis 7: Ausführungsbeispiele der erfindungsgemäßen Anlage schematisch verdeutlichen.

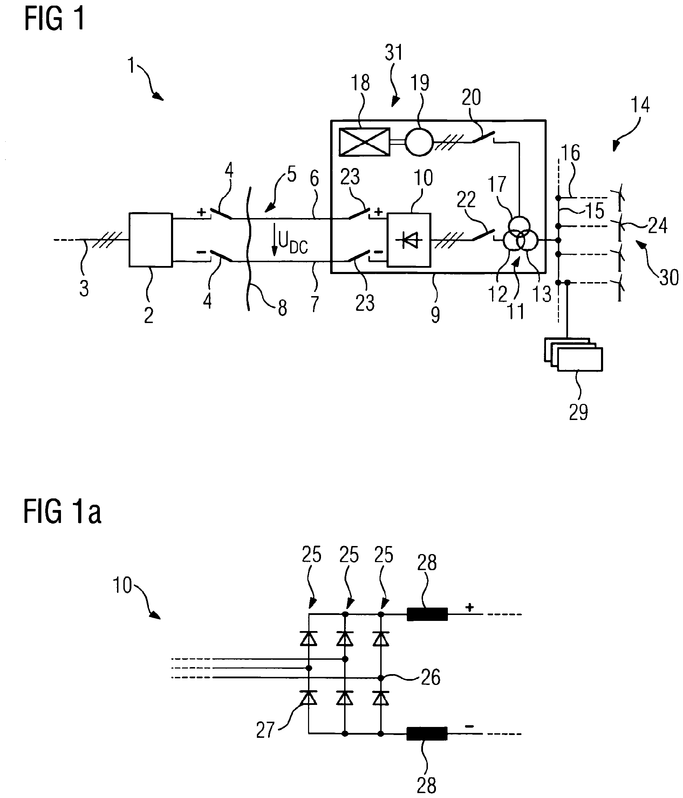

Figur 1 zeigt eine Anlage 1 mit einem landseitigen Umrichter 2, der mit seinem Wechselspannungsanschluss an ein ebenfalls landseitiges Energieversorgungsnetz 3 angeschlossen ist. Die hierfür erforderlichen Bauteile, wie Transformatoren, Schalter und dergleichen, sind aus Gründen der Übersicht figürlich nicht dargestellt. Der Umrichter 2 ist hier ein so genannter modularer Multilevel-Umrichter und weist Reihenschaltungen von zweipoligen Submodulen auf, wobei jedes Submodul mit einem Energiespeicher ausgerüstet ist. Die Submodule verfügen darüber hinaus über eine Leistungshalbleiterschaltung, die zusammen mit dem Energiespeicher eine Voll- oder Halbbrückenschaltung ausbilden. Solche modularen Mehrstufenumrichter sind jedoch dem Fachmann bekannt, so dass an dieser Stelle auf deren genaue Topologie nicht genauer eingegangen zu werden braucht.

Der Umrichter 2 ist gleichspannungsseitig an eine Gleichspannungsverbindung 5 angeschlossen, die aus zwei Gleichspannungsleitungen 6 und 7 besteht, die entgegengesetzt zueinander polarisiert sind. In der Gleichspannungsverbindung 5 sind mechanische Gleichspannungsschalter 4 angeordnet. Dabei ist der Umrichter 2 in der Nähe eines Ufers oder eine Küste 8 aufgestellt. In einer beträchtlichen Entfernung, beispielsweise 50 km bis 200 km, von der Küste 8 ist eine Hochseeplattform 9 auf den Meeresboden aufgeständert.

Auf der Hochseeplattform 9 ist ein Diodengleichrichter 10 untergebracht, der wechselspannungsseitig mit einem Transformator 11 verbunden ist. Dieser Transformator 11 weist eine mit dem Diodengleichrichter 10 galvanisch verbindbare Primärwicklung 12 sowie eine Sekundärwicklung 13 auf, die mit einem seeseitigen Wechselspannungsnetz 14 verbunden ist. Das seeseitige Wechselspannungsnetz 14 verfügt über eine Sammelschiene 15, von der Stränge 16 abgehen, in denen Windenergieanlagen 24 in Reihe angeordnet sind. Alle Windenergieanlagen 24 zusammen bilden einen Windpark 30 aus. Darüber hinaus verfügt der Transformator 11 über eine Tertiärwicklung 17, die mit einem von einem Dieselmotor 18 angetriebenen Generator 19 verbunden ist. Zum Unterbrechen der Verbindung zwischen Transformator 11 und Generator 19 ist ein mechanischer Schalter 20 vorgesehen. In der Wechselspannungsleitung zwischen der Primärwicklung 12 des Transformators 11 ist ein weiterer mechanischer Schalter 22 vorgesehen. Darüber hinaus dienen auf der Hochseeplattform 9 gleichspannungsseitig des Diodengleichrichters 10 angeordnete mechanische Gleichspannungsschalter 23 zum Unterbrechen der Gleichspannungsverbindung 5.

Der Diodengleichrichter 10 ist in Figur 1a genauer verdeutlicht. Es ist erkennbar, dass der Diodengleichrichter 10 Phasenmodule 25 aufweist, deren Anzahl der Anzahl der Phasen des Wechselspannungsnetzes 14 entspricht. In dem gezeigten Fall sind drei Phasenmodule 25 erkennbar. Jedes Phasenmodul 25 weist zwei entgegengesetzt zueinander polarisierbare Gleichspannungsanschlüsse auf, die mit einem Plus- und Minuszeichen gekennzeichnet sind. Darüber hinaus verfügt jedes Phasenmodul 25 über einen Wechselspannungsanschluss 26. Zwischen dem Wechselspannungsanschluss 26 und jedem der Gleichspannungsanschlüsse erstreckt jeweils ein Diodenventil 27, so dass jedes Phasenmodul 25 über zwei Diodenventile 27 verfügt. Die Diodeventile 27 umfassen eine Reihenschaltung von Dioden, deren Anzahl jeweils von der vorliegenden Spannung abhängig ist. Gleichspannungsseitig des Diodengleichrichters 10 ist ferner in jedem Pol Plus beziehungsweise Minus, eine Gleichspannungsglättungsdrossel 28 angeordnet, die für eine Glättung des Gleichstroms sorgt.

Der in Figur 1a dargestellte Diodengleichrichter bildet eine so genannte Sechspuls-Brücke aus, die dem Fachmann im Bereich der Hochspannungsgleichstromübertragung bestens bekannt ist.

An dieser Stelle sei jedoch darauf hingewiesen, dass der Diodengleichrichter auch zwei solcher Sechspuls-Brücken aufweisen kann, die gleichspannungsseitig miteinander verbunden und über unterschiedliche Transformatoren mit dem gleichen oder mit unterschiedlichen Abschnitten oder Strängen des Wechselspannungsnetzes verbunden sind. Die Transformatoren bewirken einen unterschiedlichen Phasenversatz der übertragenen Wechselspannung, so dass eine als solche ebenfalls bekannte 12-Puls-Brücke bereitgestellt ist. Die Verbindungsleitung der beiden Sechspulsbrücken ist zweckmäßigerweise geerdet. Natürlich kann jede der beiden Sechspulsbrücken auch unabhängig von der anderen Sechspulsbrücke an einer ihrer Gleichspannungsklemmen geerdet sein. Auch wenn der Diodengleichrichter nur eine Sechspulsbrücke ausbildet, kann diese an einer Gleichspannungsklemme mit dem Erdpotential verbunden sein, so dass ein so genannter Monopol ausgebildet ist.

Wieder mit Bezug auf Figur 1 sind wechselspannungsseitig des Diodengleichrichters 10 Filtereinheiten 29 erkennbar, die mit dem Wechselspannungsnetz 14 verbunden ist. Wie bereits ausgeführt wurde, ist aufgrund der fehlenden Ansteuerbarkeit der Diodenventile 27 des Diodengleichrichters 10 ein festes Übersetzungsverhältnis zwischen den an seinen Gleich- und Wechselspannungsanschluss abfallende Spannungen vorgegeben. Daher muss die Regelung zur Anpassung der Betriebsgrößen an verschiedene Last- und Netzzustände woanders, beispielsweise mittels der Regelung der Windenergieanlagen des Windparks 30, erfolgen. Darüber hinaus erzeugt der Diodengleichrichter 10 gleich- und wechselspannungsseitig Oberschwingungen, die mit Hilfe der Gleichspannungsdrossel 28 beziehungsweise der Filtereinheiten 29 unterdrückt werden. Der Leistungsfluss über den Diodengleichrichter 10 ist lediglich vom Windpark 30 in Richtung des landseitigen Umrichters 2 möglich. Sobald der Windpark 30 jedoch Energie benötigt, beispielsweise zum Ausrichten der Windenergieanlagen, der Rotorblätter oder zum Bereitstellen eines Wechselspannungsnetzes, muss die hierzu erforderliche Leistung durch Energieversorgungsmittel 31 bereitgestellt werden, die in dem in Figur 1 gezeigten Ausführungsbeispiel den Dieselmotor 18 sowie den Generator 19 umfassen. Mit Hilfe der Energieversorgungsmittel 31 ist es möglich, über den Transformator 11 das Wechselspannungsnetz 14 mit Energie zu versorgen. Der Dieselmotor 18 ist jedoch wartungsintensiv und nicht umweltfreundlich. Darüber hinaus muss der Kraftstoff aufwändig von Land zur Hochseeplattform bei Wind und Wetter transportiert werden.

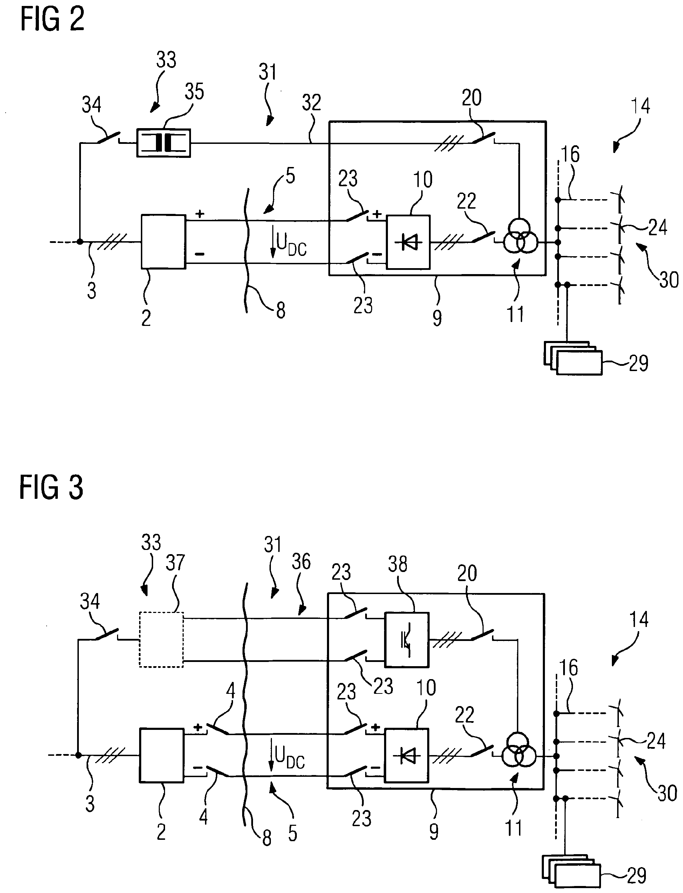

Figur 2 zeigt ein Beispiel der Anlage 1, die sich von dem in Figur 1 gezeigten Ausführungsbeispiel dadurch unterscheidet, dass die Energieversorgungsmittel 31 eine Wechselspannungsleitung 32 aufweisen, die mit einem Einkoppelbauteil 33 verbunden ist, das landseitig angeordnet ist. Das Einkoppelbauteil 33 ist mit dem Versorgungsnetz 3 verbunden und umfasst einen mechanischen Schalter 34 in Reihe zu einem Transformator 35. Auf der Hochseeplattform 9 ist der Schalter 20 erkennbar, der die Wechselspannungsleitung 33 mit der Sammelschiene 15 verbindet. Der Transformator 11 sorgt bei geschlossenem Schalter 34 zur Bereitstellung einer geeigneten Spannung, beispielsweise in der Größenordnung von 50 bis 70 kV, mit der eine Übertragung von Leistung über eine Entfernung bis zu 200 km mit Hilfe eines Wechselspannungskabels ermöglicht ist.

Die Wechselspannungsleitung 32 ist zweckmäßigerweise in der gleichen Kabelisolierung wie die Leitungen 6 und 7 der Gleichspannungsverbindung 5 angeordnet. Daher ist im Rahmen der Erfindung lediglich ein Kabel zu verlegen.

Figur 3 zeigt ein erfindungsgemäßes Ausführungsbeispiel der Anlage 1, das sich hinsichtlich der Ausgestaltung der Energieversorgungsmittel 31 von dem Ausführungsbeispiel gemäß Figur 2 unterscheidet. In dem in Figur 3 gezeigten Ausführungsbeispiel umfassen die Energieversorgungsmittel 31 eine Hilfsgleichspannungsverbindung 36, die sich zwischen einem landseitigen Hilfsumrichter 37 sowie einem auf der Hochseeplattform 9 angeordneten Zusatzwechselrichter 38 erstreckt. Die Hilfsgleichspannungsverbindung 36 ist wieder zweipolig ausgestaltet, so dass unterschiedlich polarisierte Pole bereitgestellt sind. In jedem dieser Pole ist wieder ein mechanischer Gleichspannungsschalter 23, beispielsweise ein Trennschalter, angeordnet. Der Zusatzwechselrichter 38 ist wechselspannungsseitig über einen mechanischen Schalter 20 mit der Tertiärwicklung des Transformators 11 verbunden. Dabei sind der Hilfsumrichter 37 und der Zusatzwechselrichter 38 für Leistungen ausgelegt, die ausreichen, das seeseitige Wechselspannungsnetz 16 mit der geforderten Leistung zu versorgen. Hilfsumrichter 37 und Zusatzwechselrichter 38 sind somit im Vergleich zum Diodengleichrichter 10 klein ausgestaltet.

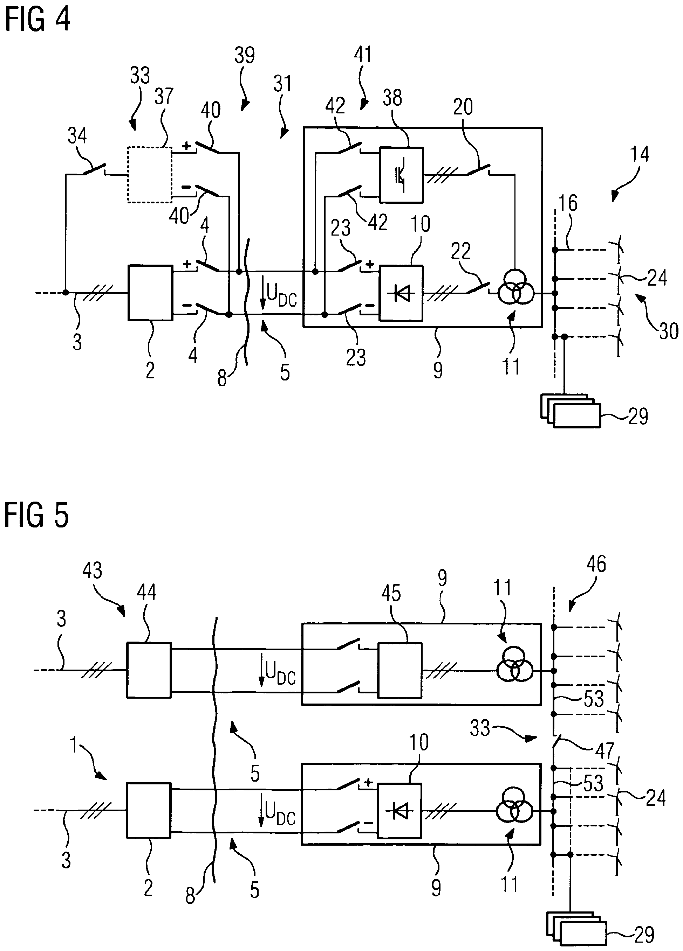

In dem in Figur 4 gezeigten Ausführungsbeispiel wird die Hauptgleichspannungsverbindung 5 gleichzeitig auch als Energieversorgungsleitung verwendet, wobei eine Schalteranordnung 39 mit den Schaltern 4 und 40 es ermöglicht, dass die Gleichspannungsverbindung 5 entweder mit dem Hauptumrichter 2 oder mit dem Hilfsumrichter 37 verbunden ist. Dieser ist an seiner Wechselspannungsseite an das Energieversorgungsnetz 3 angeschlossen. Eine weitere Schalteranordnung 41 ist auf der Hochseeplattform 9 vorgesehen, welche die wahlweise Verbindung der Gleichspannungsverbindung 5 mit dem Diodengleichrichter 10 oder dem Zusatzwechselrichter 38 ermöglicht. Benötigt das seeseitige Wechselspannungsnetz Energie, wird das Energieversorgungsnetz 3 mit dem Hilfsumrichter 37 durch Schließen des Schalters 34 verbunden. Anschließend wird mit Hilfe einer figürlich nicht dargestellten Regelung eine ausreichende Leistung gleichspannungsseitig des Hilfsumrichters 37 bereitgestellt, wobei die Schalter 40 geschlossen werden und die Schalter 4 geöffnet, so dass die Leistung über die Gleichspannungsverbindung 5 zum Zusatzwechselrichter 38 übertragen wird, wobei die Schalter 42 geschlossen und die Schalter 23 geöffnet sind. Der Schalter 20 ist ebenfalls geschlossen, so dass die vom Zusatzwechselrichter 38 wechselspannungsseitig bereitgestellte Leistung über den Transformator 11 in das Wechselspannungsnetz 14 eingespeist werden kann.

Figur 5 zeigt ein weiteres Ausführungsbeispiel der erfindungsgemäßen Vorrichtung, wobei neben der Anlage 1 eine weitere Anlage 43 bereitgestellt ist, die ebenfalls einen landseitigen Umrichter 44 aufweist, der hier mit dem gleichen Energieversorgungsnetz 3 verbunden ist. Der Umrichter 44 ist mit einem auf einer Hochseeplattform 9 angeordneten modularen Mehrstufenumrichter 45 verbunden, der ein selbstgeführter Umrichter 45 ist, mit dem die Leistungsübertragung in beiden Richtungen ermöglicht ist. Der selbstgeführte Umrichter 45 ist ebenfalls über einen Transformator 11 mit einem weiteren Wechselspannungsnetz 46 verbunden, wobei das Einkoppelbauteil 33 als wenigstens ein mechanischer Schalter 47 realisiert ist. Der oder die mechanischen Schalter 47 dienen zum Unterbrechen der sich zwischen den Wechselspannungsnetzen 46 und 14 erstreckenden Wechselspannungsleitung 53, die natürlich im Wesentlichen am Meeresboden verläuft. Wird der mechanische Schalter 47 geschlossen, ist das Wechselspannungsnetz 46 mit dem Wechselspannungsnetz 14 der erfindungsgemäßen Anlage 1 verbunden. Die Leistungs- oder Energieversorgung kann dann von der Anlage 43 bereitgestellt werden.

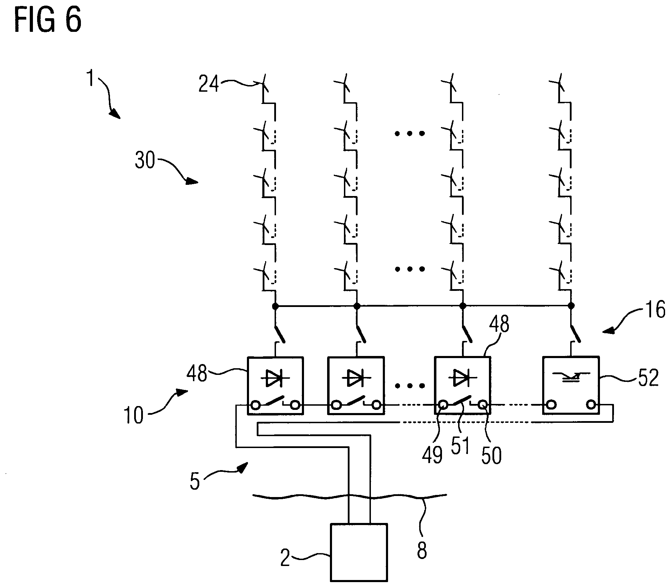

Figur 6 zeigt ein weiteres Ausführungsbeispiel einer Vorrichtung, wobei der Diodengleichrichter 10 eine Vielzahl von Teildiodengleichrichtern 48 ausbildet, die gleichspannungsseitig in Reihe zueinander geschaltet sind. Jeder Teildiodengleichrichter 48 weist zwei Gleichspannungsklemmen 49 und 50 auf, die über einen Überbrückungsschalter 51 miteinander verbunden werden können, so dass der jeweilige Teildiodengleichrichter 48 überbrückt ist. Jeder der Teildiodengleichrichter 48 ist mit einem Strang 16 verbunden, so dass eine gute Skalierbarkeit ermöglicht ist. Darüber hinaus ist erkennbar, dass den Teildiodengleichrichtern 48 ein Teilumrichter 52 gleichspannungsseitig in Reihe geschaltet ist, wobei der Teilumrichter 52 ein selbstgeführter Teilumrichter ist, der wechselspannungsseitig mit dem seeseitigen Wechselspannungsnetz 14 verbunden ist. Zum Übertragen elektrischer Leistung werden die Überbrückungsschalter 51 der Teildiodengleichrichter 48 geschlossen, so dass Leistung von dem figürlich nicht dargestellten Energieversorgungsnetz über den landseitigen Umrichter 2 und die Gleichspannungsverbindung 5 in den Teilumrichter 52 eingespeist werden kann. Der Teilumrichter 52 überträgt die Leistung schließlich in das Wechselspannungsnetz 14.

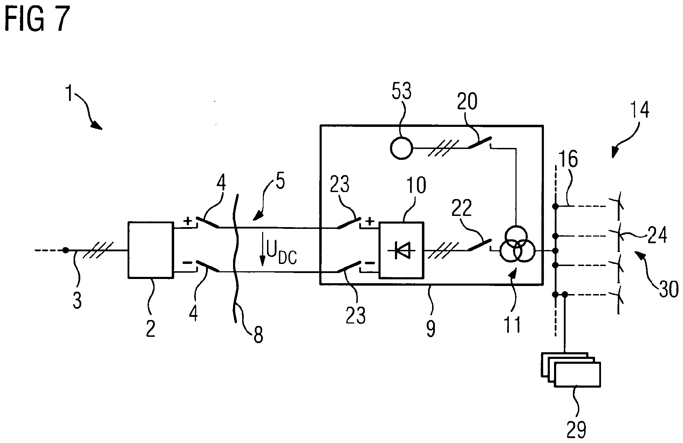

Figur 7 zeigt ein weiteres Ausführungsbeispiel, wobei ein Phasenschieber 53 in Gestalt einer Synchronmaschine erkennbar ist, der über den Transformator mit dem Wechselspannungsnetz 16 verbindbar ist. Der Phasenschieber 53 unterstützt die in Figur 7 nicht figürlich dargestellten Energieversorgungsmittel 31 bei der Bereitstellung einer Wechselspannung in dem Wechselspannungsnetz 14.

## Patentansprüche

1. Anlage (1) zum Übertragen elektrischer Leistung zwischen einem in einem Meer oder einer See angeordneten Windpark (30) und einem landseitigen Energieversorgungsnetz (3) mit einem an das Energieversorgungsnetz (3) anschließbaren landseitigen Umrichter (2), einer Gleichspannungsverbindung (5), einem see- oder landseitigen Einkoppelbauteil (33), einem seeseitig angeordneten Zusatzwechselrichter (38) und einem seeseitigen Diodengleichrichter (10), wobei der landseitige Umrichter (2) über die Gleichspannungsverbindung (5) mit dem seeseitigen Diodengleichrichter (10) verbunden ist,
wobei der Diodengleichrichter (10) über ein seeseitiges Wechselspannungsnetz (14) mit dem Windpark (30) gekoppelt ist, wobei Energieversorgungsmittel (31) zum Einspeisen elektrischer Leistung in das seeseitige Wechselspannungsnetz (14) vorgesehen sind,
wobei die Energieversorgungsmittel (31) wenigstens eine sich zumindest teilweise im Meer erstreckende Energieversorgungsleitung (32,36,53) aufweisen, die das seeseitige Wechselspannungsnetz (14) mit dem see- oder landseitigen Einkoppelbauteil (33) verbindet, das zum Einspeisen einer Leistung in die Energieversorgungsleitung (32,36) eingerichtet ist,
**dadurch gekennzeichnet, dass**
- die Energieversorgungsleitung eine zusätzliche Hilfsgleichspannungsverbindung (36) ist, die mit dem Einkoppelbauteil (33) und dem seeseitig angeordneten Zusatzwechselrichter (38) verbunden ist, und
- das Einkoppelbauteil ein zusätzlicher Hilfsumrichter (37) ist.

2. Anlage (1) nach Anspruch 1,
**dadurch gekennzeichnet, dass** der Umrichter (2) und/oder der Hilfsumrichter (37) jeweils modulare Mehrstufenumrichter sind.

3. Anlage (1) nach einem der vorhergehenden Ansprüche,
**dadurch gekennzeichnet, dass** der Diodengleichrichter (10) über wenigstens einen Transformator (11) mit dem seeseitigen Wechselspannungsnetz (14) verbunden ist.

4. Anlage (1) nach einem der vorhergehenden Ansprüche,
**dadurch gekennzeichnet, dass** in der Gleichspannungsverbindung (5) wenigstens eine Gleichspannungsglättungsdrossel (28) angeordnet ist.

5. Anlage (1) nach einem der vorhergehenden Ansprüche,
**dadurch gekennzeichnet, dass** wechselspannungsseitig des Diodengleichrichters (10) eine Filtereinheit (29) vorgesehen ist.

6. Anlage (1) Anspruch 5,
**dadurch gekennzeichnet, dass** die Filtereinheit (29) zumindest eine Windenergieanlage des Windparks umfasst.

7. Anlage (1) nach einem der vorhergehenden Ansprüche,
**dadurch gekennzeichnet, dass** der Diodengleichrichter (10) mehrere gleichspannungsseitig in Reihe oder parallel geschaltete Teildiodengleichrichter (48) aufweist.

8. Anlage (1) nach Anspruch 7,
**dadurch gekennzeichnet, dass** jeder Teildiodengleichrichter (48) über einen separaten Teiltransformator mit dem Wechselspannungsnetz (14) verbunden ist.

9. Anlage (1) nach Anspruch 7 oder 8,
**dadurch gekennzeichnet, dass** die Teildiodengleichrichter (48) jeweils mittels eines Überbrückungsschalters (5) überbrückbar sind.

## Claims

1. Installation (1) for transmitting electrical power between a wind farm (30) arranged in a sea or a lake and a land-based energy supply network (3) having a land-based converter (2) that can be connected to the energy supply network (3), a DC voltage connection (5), a lake-based or land-based coupling-in component (33), a lake-based additional inverter (38) and a lake-based diode rectifier (10), wherein the land-based converter (2) is connected to the lake-based diode rectifier (10) via the DC voltage connection (5),
wherein the diode rectifier (10) is coupled to the wind farm (30) via a lake-based AC voltage network (14),
wherein energy supply means (31) are provided for feeding electrical power into the lake-based AC voltage network (14), wherein the energy supply means (31) have at least one energy supply line (32, 36, 53) that extends at least partly into the sea and that connects the lake-based AC voltage network (14) to the lake-based or land-based coupling-in component (33), which is configured to feed power into the energy supply line (32, 36),
**characterized in that**
- the energy supply line is an additional auxiliary DC voltage connection (36) that is connected to the coupling-in component (33) and the lake-based additional inverter (38), and
- the coupling-in component is an additional auxiliary converter (37) .

2. Installation (1) according to Claim 1,
**characterized in that**
the converter (2) and/or the auxiliary converter (37) are in each case modular multistage converters.

3. Installation (1) according to either of the preceding claims,
**characterized in that**
the diode rectifier (10) is connected to the lake-based AC voltage network (14) by way of at least one transformer (11).

4. Installation (1) according to one of the preceding claims,
**characterized in that**
at least one DC voltage smoothing inductor (28) is arranged in the DC voltage connection (5).

5. Installation (1) according to one of the preceding claims,
**characterized in that**
a filter unit (29) is provided on the AC voltage side of the diode rectifier (10).

6. Installation (1) according to Claim 5,
**characterized in that**
the filter unit (29) comprises at least one wind energy installation of the wind farm.

7. Installation (1) according to one of the preceding claims,
**characterized in that**
the diode rectifier (10) has a plurality of partial diode rectifiers (48) connected in series or in parallel on the DC voltage side.

8. Installation (1) according to Claim 7,
**characterized in that**
each partial diode rectifier (48) is connected to the AC voltage network (14) via a separate partial transformer.

9. Installation (1) according to Claim 7 or 8,
**characterized in that**
the partial diode rectifiers (48) can each be bypassed by means of a bypass switch (5).

## Revendications

1. Installation (1) de transport de puissance électrique entre un parc (30) éolien en mer ou sur un lac et un réseau (3) d'alimentation en énergie sur la terre ferme, comprenant un convertisseur (2) du côté de la terre ferme, pouvant être connecté au réseau (3) d'alimentation en énergie, une liaison (5) à tension continue, une pièce (33) d'injection du côté de la mer ou du côté de la terre ferme, un onduleur (38) supplémentaire disposé du côté de la mer et un redresseur (10) à diode du côté de la mer, le convertisseur (2) du côté de la terre ferme étant connecté au redresseur (10) à diode du côté de la mer par la liaison (5) à tension continue,
dans laquelle le redresseur (10) à diode est connecté au parc (30) éolien par un réseau (14) à tension alternative du côté de la mer,
dans laquelle il est prévu des moyens (31) d'alimentation en énergie pour injecter de la puissance électrique dans le réseau (14) à tension alternative du côté de la mer,
dans laquelle les moyens (31) d'alimentation en énergie ont au moins une ligne (32, 36, 53) d'alimentation en énergie s'étendant, au moins en partie, dans la mer et connectant le réseau (14) à tension alternative du côté de la mer à la pièce (33) d'injection du côté de la mer ou du côté de la terre ferme, qui est conçue pour l'injection d'une puissance dans la ligne (32, 36) d'alimentation en énergie,
**caractérisée en ce que**
- la ligne d'alimentation en énergie est une liaison (36) supplémentaire à tension continue auxiliaire, qui est connectée à la pièce (33) d'injection et à l'onduleur (38) supplémentaire monté du côté de la mer, et
- la pièce d'injection est un convertisseur (37) auxiliaire supplémentaire.

2. Installation (1) suivant la revendication 1,
**caractérisée en ce que**
le convertisseur (2) et/ou le convertisseur (37) auxiliaire sont chacun un convertisseur modulaire à plusieurs étages.

3. Installation (1) suivant l'une des revendications précédentes,
**caractérisée en ce que**
le redresseur (10) à diode est connecté au réseau (14) à tension alternative du côté de la mer par l'intermédiaire d'au moins un transformateur (11).

4. Installation (1) suivant l'une des revendications précédentes,
**caractérisée en ce qu'**
au moins une bobine (28) de lissage à tension continue est montée dans la liaison (5) à tension continue.

5. Installation (1) suivant l'une des revendications précédentes,
**caractérisée en ce qu'**
une unité (29) de filtrage est prévue du côté de la tension alternative du redresseur (10) à diode.

6. Installation (1) suivant la revendication 5,
**caractérisée en ce que**
l'unité (29) de filtrage comprend au moins une installation d'éolienne du parc éolien.

7. Installation (1) suivant l'une des revendications précédentes,
**caractérisée en ce que**
le redresseur (10) à diode a plusieurs sous-redresseurs (48) à diode montés en série ou en parallèle du côté de la tension continue.

8. Installation (1) suivant la revendication 7,
**caractérisée en ce que**
chaque sous-redresseur (48) à diode est relié au réseau (14) à tension alternative par l'intermédiaire d'un sous-transformateur distinct.

9. Installation 1 suivant la revendication 7 ou 8,
**caractérisée en ce que**
les sous-redresseurs (48) à diode peuvent être shuntés chacun au moyen d'un interrupteur (5) de shuntage.
